Europäisches Patentamt

European Patent Office

Office européen des brevets

(19)

(11) Publication number: **0 462 080 A1**

## (12) EUROPEAN PATENT APPLICATION

(21) Application number: **91830254.8**

(51) Int. Cl.⁵: **B66F 9/075**

(22) Date of filing: **11.06.91**

(30) Priority: **15.06.90 IT 6743890**

(43) Date of publication of application:
**18.12.91 Bulletin 91/51**

(84) Designated Contracting States:
**AT BE CH DE DK ES FR GB GR IT LI LU NL SE**

(71) Applicant: **GRAZIANO TRASMISSIONI S.p.A.
Via Cumiana 14
I-10090 Cascine Vica-Rivoli (Torino) (IT)**

(72) Inventor: **Cerrone, Carmine
Via E. Fermi 7
I-10042 Nichelino (Torino) (IT)**
Inventor: **Mussa, Gabriele
Via Giacomo Medici 91
I-10145 Torino (IT)**

(74) Representative: **Notaro, Giancarlo et al
c/o Jacobacci-Casetta & Perani S.p.A. Via
Alfieri, 17
I-10121 Torino (IT)**

(54) An inching valve for power-shift transmissions, particularly for lift trucks.

(57) The stem of an inching valve for a power-shift transmission, particularly for lift trucks, is controlled by a hydraulically-operated piston (16) whose axis (18) is distinct from and parallel to the axis (19) of the stem (7) and which is connected to the stem (7) by means of a mechanical transmission (21). The risk of contamination of the fluid used for operating the piston (16) (which is the fluid of the vehicle's braking circuit) by the oil used in the power-shift transmission is thus avoided.

EP 0 462 080 A1

The present invention relates to an inching valve for power-shift transmissions, particularly for lift trucks.

In particular, the invention relates to an inching valve of known type, comprising:
a valve body,
a valve stem movable between a rest position in which an inlet of the valve connected to a pressurised-fluid supply duct communicates with an outlet connected to the circuit downstream of the valve, and an operative position in which the inlet is isolated and the outlet communicates with a discharge, and
a hydraulically-operated piston for controlling the position of the valve stem.

Inching valves associated with power-shift transmissions (which use several multiple-disc clutches engageable selectively to obtain the various gear ratios) are well known in the art and are used to achieve a slow forward speed of the lift truck, for example, during the stage when it approaches a load to be lifted, even when the internal combustion engine of the truck is kept running at full speed to enable the lifting device to be raised rapidly.

In more conventional solutions, the stem of the inching valve is controlled by the operator by means of a pedal which is connected to the stem through a mechanical transmission. More recent solutions provide for the hydraulic control of the stem of the inching valve. In this case also, the operator controls the valve by means of a pedal but the action of the pedal is transmitted to the valve stem by means of a hydraulic device. With this technique, the piston which controls the stem of the inching valve is operated by the same fluid as is used in the vehicle's braking circuit. In this case, the pedal which controls the inching valve is also the brake pedal of the vehicle.

With inching valves produced in accordance with this known technique, however, there is a risk of the circuit for the brake fluid being contaminated from the hydraulic circuit of the power-shift transmission. Typically, the fluid used in the power-shift transmission, which is also intended to pass through the inching valve, is a lubricating oil which is incompatible with the fluid normally used in the braking circuit. The seals used for the conventional mineral oil which flows through the inching valve are not compatible with the fluid used in the braking circuit, and vice versa. Sometimes, some of the mineral oil from the transmission enters the circuit reserved for the brake fluid and mixes with that fluid, causing the rapid deterioration of the seals of the master cylinder and wheel cylinders of the vehicle's brakes.

The object of the present invention is to provide a valve of the type indicated at the beginning which does not have the aforesaid disadvantage.

According to the invention, this object is achieved by virtue of a valve of the type specified above, characterised in that the hydraulically-operated auxiliary piston for controlling the position of the stem of the inching valve is arranged on an axis distinct from and parallel to the axis of the stem of the inching valve and is operatively connected to the stem by means of a mechanical transmission.

This arrangement makes it virtually impossible for the transmission oil to leak into the region reserved for the brake fluid and vice versa.

The hydraulically-operated piston for controlling the position of the stem of the inching valve is preferably arranged above the axis of the stem of the inching valve. The contamination of the brake fluid by the transmission oil (which has more dangerous consequences than the contamination of the transmission oil by the brake fluid since it renders the braking system of the vehicle inefficient) is thus made absolutely impossible as the aforesaid leakage is opposed by gravity.

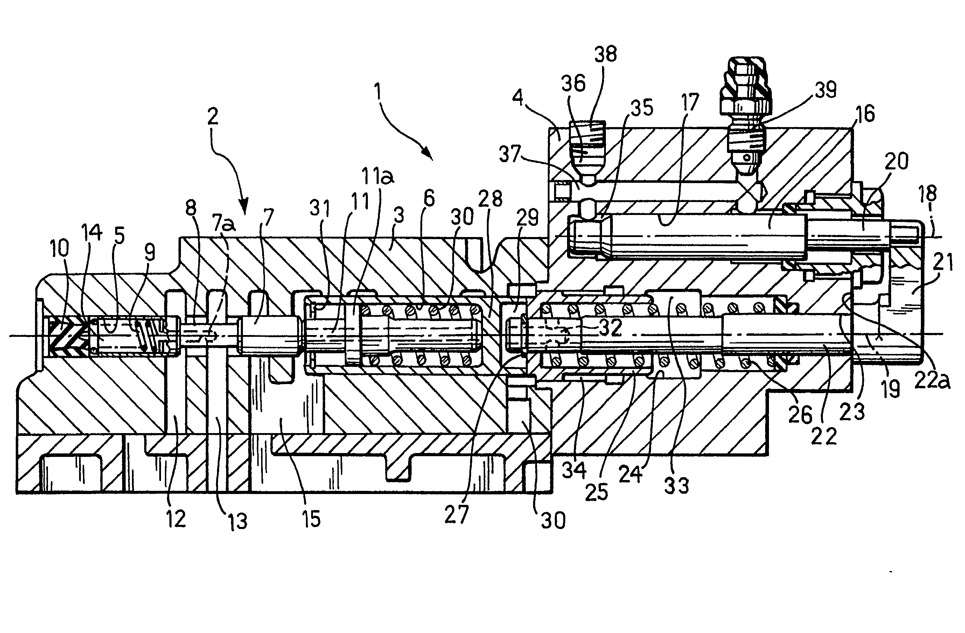

Further characteristics of the invention will become clear from the description which follows with reference to the appended drawing, provided purely by way of non-limiting example, which shows a longitudinal section of a valve according to the invention.

In the drawing, a hydraulically-operated inching valve for a power-shift transmission system of a lift truck is generally indicated 1. The valve 1 comprises a body 2 including two parts 3, 4 fixed together by screws (not shown in the drawing).

The part 2 has a cylindrical through-hole with a smaller-diameter portion 5 and a larger-diameter portion 6. The stem 7 of the inching valve is slidable in the smaller-diameter portion 5 and has an intermediate portion of narrow diameter which, together with the wall of the hole 5, defines an annular chamber 8.

The left-hand end of the stem 7 (with reference to the drawing) is acted upon by a helical spring 9 interposed between the stem 7 and a closure plug 10 inserted in the hole 5. The opposite end of the stem 7 is in contact with the end of a second stem 11 whose function will be explained below.

The chamber 8 puts an inlet 12 connected to the supply duct for the pressurised fluid (the mineral oil used in the power-shift transmission) into communication with an outlet 13 connected to the part of the hydraulic circuit of the transmission which is downstream of the valve. Essentially, the pressurised fluid supplied downstream of the valve is intended selectively to operate a series of multiple-disc clutches provided in the gearbox in order to actuate the various gear ratios desired.

The chamber 8 also communicates with a chamber 14 defined between the stem 7 and the plug 10 through a duct 7a formed in the stem 7.

The stem 7 can be moved to the right (still with reference to the drawing) towards an operative position in which communication between the inlet 12 and the chamber 8 is cut off, whilst the chamber 8 puts the outlet 13 into communication with a discharge aperture 15 connected to a discharge reservoir. In this position, therefore, the pressurised fluid downstream of the valve is discharged through the chamber 8 and the outlet 15, releasing pressure from the multiple-disc clutches of the gearbox. The pressure exerted on the multiple-disc clutches can thus be controlled with the desired precision by controlling the position of the stem 7 so that the advance of the vehicle can be controlled as desired even when the engine is running fast because the lifting device of the lift truck is in operation. The operator achieves this, on the one hand, by keeping the engine running fast by means of the vehicle's accelerator and, at the same time, by pressing the pedal which controls the inching valve, the speed of advance of the vehicle being slower the more the valve-control pedal is pressed.

In the device according to the invention, the position of the stem 7 of the inching valve is controlled by a piston 16 which is slidable in a hole 17 formed in the part 4. As can be seen in the drawings, this hole has an axis 18 distinct from and parallel to the axis 19 of the stem 7. Moreover, when the valve is fitted in the vehicle, the hole 17 is above the axis 19. The piston 16 has a rod 20 which projects from the part 4 and is connected by a rigid connection member 21 to an auxiliary piston 22 which is slidable in a narrow end portion 23 of a cylindrical hole 24 formed in the part 4 as a coaxial extension of the hole 6. A cup-shaped sleeve 25 is slidable on the piston 22. A helical spring 26 is interposed between the end wall of the cup-shaped sleeve 25 and an annular abutment surface of the hole 24 so as to urge the sleeve 25 towards the left with reference to the drawing. The sleeve 25 consequently urges the piston 22 towards the left, by means of a resilient ring 27, so as to hold an annular abutment 22a of the connection member 21 against the outer surface of the element 4. In this condition, the left-hand end surface of the sleeve 25 (with reference to the drawing) is in contact with the corresponding end surface of a further sleeve 28 which is slidable in the hole 6. A chamber 29 defined between the end wall of the sleeve 28 and the end wall of the sleeve 25 communicates with a discharge aperture 30 through notches formed in the end edge of the sleeve 28. The stem 11 has a piston 11a which is slidable in the sleeve 28. A helical spring 30 is interposed between the piston 11a and the end wall of the sleeve 28 and tends to hold the stem 11 against the stem 7. The piston 11a can move to the left relative to the sleeve 28 from this position until it reaches the end position defined by a resilient ring 31 mounted in the end opening of the sleeve 28.

The chamber 29 which communicates with the discharge aperture 30 also communicates with the chamber 33 defined between the piston 22 and the end wall 24 through ducts 32 formed in the piston 22. The annular chamber 34 defined between the wall of the hole 24 and the outer surface of the sleeve 25, however, communicates with the chamber 14 of the valve through a duct not visible in the drawing.

With reference again to the operating piston 16, this piston can be moved to the right (with reference to the drawing) from the rest position shown in the drawing (which corresponds to the engagement of the abutment surface 22a with the abutment surface of the part 4) by the supply of pressurised fluid to a chamber 35 through an aperture 36 and a supply duct 37. The aperture 36 can be closed by a plug 37 for the storage and transportation of the valve. The supply duct 37 also communicates with a bleeder valve 39 of the braking circuit. The aperture 36 is intended to be connected to the braking circuit of the vehicle and therefore receives pressurised fluid from the braking circuit. As indicated at the beginning of the present description, this fluid is different from that of the power-shift transmission. Typically, the latter is a conventional mineral oil, whilst the fluid in the braking circuit is of the type normally used for that purpose. The arrangement described above prevents the contamination of each of the two fluids by the other and thus prevents the deterioration of the respective seals. Seals designed for one of the aforesaid fluids are in fact unsuitable for the other and may deteriorate in the event of contamination.

The device described above operates as follows: as already indicated, the drawing shows the valve in the rest condition in which the pressurised fluid arriving at the inlet 12 is sent through the chamber 8 to the outlet 13 connected to the power-shift transmission. The operator can therefore selectively engage the multiple-disc clutches of the transmission by operating the usual selectors so as to make the vehicle advance. When he wishes to control the advance of the vehicle, whilst keeping the internal combustion engine at a fast running speed, the operator acts on the brake pedal to send pressurised fluid to the aperture 36, the pressure of the fluid being greater the more the pedal is pressed. The supply of pressurised fluid to the aperture 36 causes the piston 16 to move to the right (with reference to the drawing) and hence the connection member 21 and the piston 22 connected thereto to move to the right against the action of the spring 26. The movement of the piston 22 to the right causes the sleeve 25 to move to the right. The spring 30 forces the sleeve 28 to follow the movement of the sleeve 25 to the right. Once the resilient ring 31 comes into contact with the piston 11a, further movement of the piston 22 to the right causes a corresponding movement of the stem 11. When the stem 11 moves to the right, the stem 7 also moves to the right, following the movement of the stem 11, under the action of the spring 9. As indicated above, the movement of the stem 7 to the right closes the inlet 12 and the aperture 13 is put into communication with the discharge aperture 15 through the chamber 8.

The basic characteristic of the device according to the invention lies in the fact that, unlike conventional solutions, the axis 18 of the operating piston 16 is distinct from and parallel to the axis 19 of the stem 7 of the inching valve. This avoids the danger of the fluid in the braking circuit, which is used for operaitng the piston 16, being contaminated by the transmission oil flowing in the underlying part of the valve.

Naturally, the principle of the invention remaining the same, the details of construction and forms of embodiment may be varied widely with respect to those described and illustrated, without thereby departing from the scope of the present invention.

## Claims

1. An inching valve for power-shift transmissions, particularly for lift trucks, comprising:
a valve body (2),
a valve stem (7) movable between a rest position in which an inlet (12) of the valve connected to a pressurised-fluid supply duct communicates with an outlet (13) connected to the circuit downstream of the valve, and an operative position in which the inlet (12) is isolated and the outlet (13) communicates with discharge (15), and
a hydraulically-operated piston (16) for controlling the position of the stem (7) of the inching valve,
characterised in that the hydraulically-operated piston is arranged on an axis (18) distinct from and parallel to the axis (19) of the stem (7) of the inching valve and is operatively connected to the stem (7) by means of a mechanical transmission (21).

2. A valve according to Claim 1, characterised in that, when the valve is in its mounted position, the hydraulically-operated piston (16) is arranged above the axis (19) of the stem (7) of the inching valve.

3. A valve according to Claim 2, characterised in that the hydraulically-operated piston (16) has a rod (20) which projects from the valve body and is connected by a rigid connection member (21) to an auxiliary piston (22) which is operatively connected to the stem (7) of the inching valve and is arranged as a coaxial extension thereof.
A valve according to Claim 3, characterised in that the auxiliary piston (22) has a slidable sleeve (25) biased by a spring (26) against a stop element (27) connected to the auxiliary piston (22), the slidable sleeve (25) being in abutment with a further sleeve (28) slidable in the valve body (2) along the axis of the stem (7) of the inching valve, an auxiliary piston (11a) being slidable in the further sleeve and being urged against an end of the stem (7) of the inching valve by a spring (30), the opposite end of the stem (7) being urged against the auxiliary piston (11a) by a spring (9).

European Patent Office

**EUROPEAN SEARCH REPORT**

Application Number

EP 91 83 0254

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 243 835 (FIRMA CARL HURTH MASCHINEN- UND ZAHNRADFABRIK) * Page 1, lines 1-7; page 2, lines 2-36; page 3, line 33 - page 4, line 8; figures 1,2 * | 1 | B 66 F 9/075 |
| Y | FR-A-2 437 318 (ZAHNRADFABRIK FRIEDRICHSHAFEN AG) * Page 5, lines 14-17; page 7, line 10 - page 8, line 18; figure 2 * | 1 | |
| A | FR-A-1 446 639 (FIRMA E. HENGSTLER) * Page 4, left-hand column, lines 29-33,39-44; figure 2 * | 1,3 | |
| A | DE-B-1 184 169 (BROCKHOUSE ENGINEERING LD) * Column 5, lines 33-52; figures * | 1,3 | |
| A | US-A-3 339 672 (CRANDALL) * Column 5, lines 26-29; figures 3,4 * | 1 | TECHNICAL FIELDS SEARCHED (Int. Cl.5) |
| A | FR-A-2 202 026 (MAIRAL S.A.) * Figure 3 * | 1 | B 66 F F 16 D F 16 H B 60 K |
| A | GB-A-2 169 688 (LINDE AG) | | |
| A | GB-A-1 496 969 (DAVID BROWN GEAR INDUSTRIES LTD) | | |

The present search report has been drawn up for all claims

| Place of search | Date of completion of the search | Examiner |
|---|---|---|
| THE HAGUE | 12-09-1991 | GUTHMULLER J.A.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document